# EUROPÄISCHE PATENTSCHRIFT

(11) **EP 4 302 922 B1**
(45) Veröffentlichungstag und Bekanntmachung des Hinweises auf die Patenterteilung: **02.10.2024**
(21) Anmeldenummer: 22183451.8
(22) Anmeldetag: 06.07.2022
(51) Int. Cl.: B23Q 1/76, B23Q 17/00

(54) **LÜNETTE**
STATIONARY SUPPORT
LUNETTE

(43) Veröffentlichungstag der Anmeldung: 10.01.2024
(73) Patentinhaber: SMW-AUTOBLOK Spannsysteme GmbH, 88074 Meckenbeuren (DE)
(72) Erfinder: MAURER, Eckhard, 88094 Oberteuringen (DE); SCHNEIDER, Tobias, 88079 Kressbronn (DE)
(74) Vertreter: Christ, Niko

(56) Entgegenhaltungen:
- CN-A- 113 977 304
- DE-B3- 102007 025 924
- US-A1- 2009 001 643

## Beschreibung

Die vorliegende Erfindung betrifft eine Lünette zum Halten eines Werkstücks auf einer Werkzeugmaschine, mit einem im Wesentlichen senkrecht ausrückbaren Betätigungskolben, welcher beiderseits von zwei Winkelhebeln flankiert ist und innerhalb eines Gehäuses über ein Druckelement mit diesen zusammenwirkt, wobei dem Gehäuse eine Sperrluftzufuhr zur Vermeidung eines Eindringens von Flüssigkeit zugeordnet ist.

Eine solche Lünette ist bereits aus der DE 10 2007 025 924 B3 vorbekannt. Als Weggeber zur Erfassung der Position des Druckelements und damit zur Kontrolle der Spannstellung der Lünette sieht diese Vorveröffentlichung einen Seilzug vor, welcher mithilfe einer ortsfesten Aufrollvorrichtung auf- und abgerollt werden kann. Eine Positionserfassung erfolgt hinsichtlich der Drehstellung der Aufrollvorrichtung, welche über ein Potentiometer abgegriffen werden kann. In Abhängigkeit von einem an dem Potentiometer gemessenen Widerstand kann auf die jeweilige Spannlage des Betätigungskolbens zurückgeschlossen werden.

Eine Lünette besteht aus drei Haltegliedern, welche sich einem einzuspannenden Werkstück von drei Seiten nähern. Im Rahmen eines Spannvorgangs wird der Betätigungskolben ausgerückt und weist hierbei ein mittleres Halteglied auf, welches sich dem Werkstück von seiner Unterseite her nähert. Beiderseits des Betätigungskolbens sind zwei Winkelhebel vorgesehen, welche um eine Schwenkachse drehbar gelagert sind und durch ein Anheben des mit dem Betätigungskolbens verbundenen Druckelements von einer Offenstellung in eine Geschlossenstellung verfahren werden können. Hierzu weist das Druckelement Abrollflächen auf, auf denen Abrollmittel an den im Gehäuse befindlichen Enden der Winkelhebel sich abstützen und über welche die Winkelhebel in Abhängigkeit von der Spannlage des Betätigungskolbens auslenkbar sind. Hierbei befindet sich die Aufrollvorrichtung für den Seilzug außerhalb des Gehäuses, in welchem der Betätigungskolben mit den Winkelhebeln zusammenwirkt. Im Rahmen der Bearbeitung des Werkstücks auftretendes Spritzwasser, etwa Kühlschmiermittel, kann hierbei in das Gehäuse eintreten. Der Seilzug wird dabei zwar nicht in einem tiefsten Punkt aus dem Gehäuse herausgeleitet, dennoch hat es sich gezeigt, dass den Seilzug entlang Flüssigkeit nach unten aus dem Gehäuse herausläuft und in die Aufrollvorrichtung eindringt und diese auf Dauer beschädigt.

CN 113 977 304 A offenbart eine Lünette nach dem Oberbegriff des Anspruchs 1.

Vor diesem Hintergrund liegt der vorliegenden Erfindung die Aufgabe zu Grunde, eine Lünette zum Halten eines Werkstücks vorzuschlagen, welche eine genaue Positionserfassung ermöglicht, jedoch Schäden und Beeinträchtigungen durch eindringende Flüssigkeit möglichst weitgehend vermeidet.

Gelöst wird dies durch eine Lünette zum Halten eines Werkstücks gemäß den Merkmalen des unabhängigen Anspruchs 1. Sinnvolle Weiterbildungen einer solchen Lünette können den sich anschließenden abhängigen Ansprüchen entnommen werden.

Erfindungsgemäß vorgesehen ist eine Lünette zum Halten eines Werkstücks auf einer Werkzeugmaschine, mit einem im Wesentlichen senkrecht ausrückbaren Betätigungskolben, welcher beiderseits von zwei Winkelhebeln flankiert ist und innerhalb eines Gehäuses über ein Druckelement mit diesen zusammenwirkt, wobei dem Gehäuse eine Sperrluftzufuhr zur Vermeidung eines Eindringens von Flüssigkeit zugeordnet ist. Vom vorbekannten Stand der Technik hebt sich eine solche Lünette dadurch ab, dass eine Ausrückposition des Druckelements mittels eines Abstandssensors erfassbar ist, welcher dem Gehäuse unterhalb einer tiefsten Position des Druckelements zugeordnet ist und eine Vorfeldkavität des Abstandssensors zur Entwässerung desselben eine über ein sperrluftbetätigtes Ablaufventil verschließbare Ablaufbohrung aufweist.

Dies hat den Vorteil, dass während des Betriebs der Werkzeugmaschine, also während Flüssigkeit anfallen kann, das Gehäuse mit einem Sperrdruck, vorzugsweise im Bereich eines Überdrucks von 0,5 bis 1,0 bar, beaufschlagt ist, welcher die Flüssigkeit davon abhält, in das Gehäuse einzudringen. Wird nach dem Betrieb die Sperrluft abgeschaltet, so kann etwa noch vorhandene Flüssigkeit zwar noch in das Gehäuse eindringen, wird sich aber in einem tiefsten Punkt sammeln und kann dort abgelassen werden. Einen solchen tiefsten Punkt kann beispielsweise die Position des Abstandssensors darstellen, da dieser noch unterhalb der tiefsten Verfahrposition des Druckelements angeordnet sein muss, um den gesamten Verfahrweg des Druckelements erfassen zu können.

Die Vorfeldkavität des Abstandssensors, welcher zum Einen eine genaue Messung der Position des Druckelements erlaubt und zum Anderen zum Gehäuse hin flüssigkeitsdicht abgeschirmt werden kann, kann hierbei als Auffangbecken dienen, in welche anfallende Flüssigkeit einlaufen kann. diese wird dann über die Ablaufbohrung abfließen, so dass sichergestellt ist, dass sich vor dem Abstandssensor keine Flüssigkeit befindet.

Zu unterscheiden ist zwischen einer Ruhesituation und einer Betriebssituation. In der Ruhesituation kann anfallende Flüssigkeit in die Vorfeldkavität einlaufen. Diese kann vorteilhafterweise, muss aber keinen absoluten Tiefpunkt der Gehäusekavität darstellen. Es können an tieferen Punkten weitere Auslässe vorgesehen sein. Im drucklosen Zustand, also wenn keine Sperrluft anliegt, ist die Ablaufbohrung von dem Ablaufventil freigegeben, so dass die Flüssigkeit aus der Vorfeldkavität ablaufen kann.

In der Betriebssituation hingegen wird Sperrluft in das Gehäuse eingebracht und damit ein Überdruck in dem Gehäuse erzeugt. Gleichzeitig wird die Sperrluft mit ihrem Druck an das Ablaufventil angelegt und dieses damit betätigt. Die Sperrluft kann damit nicht durch die Ablaufbohrung entweichen und die Sperrluft sorgt dafür, dass keine Flüssigkeit in das Gehäuse eindringt. Insbesondere wird die Vorfeldkavität freigehalten, so dass Messungen des Abstandssensors nicht beeinträchtigt werden.

In konkreter Weiterbildung kann vorgesehen sein, dass der Abstandssensor parallel zu dem Betätigungskolben ausgerichtet ist und das Druckelement eine dem Abstandssensor gegenüberliegende Reflexionsfläche zur Reflexion eines von dem Abstandssensor emittierten Abstandssignals aufweist. Ein solcher Aufbau ermöglicht eine kontaktfreie Erfassung des Abstands zwischen dem Abstandssensor und dem Druckelement über verschiedenartige Sensoren. Hierbei ist vorzugsweise darauf zu achten, dass die Reflexionsfläche so gerade ausgerichtet und beschaffen ist, dass ein von dem Abstandssensor emittiertes Signal wieder zu diesem zurückgeworfen wird und die Reflexion dort in ausreichender Stärke eintrifft.

Im Hinblick auf die Ausgestaltung des Ablaufventil kann dem Ablaufventil ein federbetätigter Sperrkolben zugeordnet sein, welcher in einem drucklosen Zustand die Ablaufbohrung freigibt. Hierbei kann der Sperrkolben eine kopfseitige Verbreiterung aufweisen, wobei zwischen dieser Verbreiterung und einer Anschlagfläche eine Druckfeder angeordnet ist. Eine Betätigung des Sperrkolbens kann dann nur gegen die Kraft der Druckfeder erfolgen.

Bevorzugtermaßen kann dem Sperrkolben auf einer Betätigungsseite ein separater Sperrluftanschluss zugeordnet sein. Über diesen separaten Sperrluftanschluss kann eine Luftzufuhr bereitgestellt sein, welche es ermöglicht, den Sperrkolben gegen die Federkraft der Druckfeder in die Ablaufbohrung einrücken zu lassen um diese, vorzugsweise luftdicht, zu verschließen. Dies hat den Vorteil, dass aufgrund des separaten Luftanschlusses ein ausreichender Druck zur Betätigung des Ablaufventils sichergestellt werden kann.

Alternativ kann jedoch der Sperrkolben auf seiner Betätigungsseite mit einem mit Sperrluft beaufschlagten Gehäuseteil verbunden sein. Dies bedingt zwar ebenfalls die Beaufschlagung des Ventils mit Sperrluft, jedoch nicht zwangsläufig mit einer separaten Leitung.

Mit einigem Vorteil können der Abstandssensor, die Vorfeldkavität, die Ablaufbohrung und das Ablaufventil in einem von dem Gehäuse lösbaren Entwässerungsgehäuse aufgenommen sein. Dies ermöglicht einen einfachen Austausch der Positionserfassung durch ein Ersetzen der gesamten Baugruppe. Ein eventueller Fehlerfall kann dadurch leichter behoben werden.

Bevorzugtermaßen kann dem Gehäuse wenigstens ein Sperrluftanschluss an einem wenigstens lokalen geodätischen Tiefpunkt einer in dem Gehäuse gebildeten Gehäusekavität zugeordnet sein. Da Flüssigkeit sich aufgrund der Schwerkraft sich in den tiefsten Punkten sammelt, kann es sinnvoll sein, gerade hier die Sperrluft einzubringen, da die Sperrluft ansonsten bereits eingedrungene Flüssigkeit nicht wieder austreiben kann. Ebenfalls kann in solchen Punkten eine weitere verschließbare Ablaufleitung vorhanden sein.

Mit besonderem Vorteil kann dem Gehäuse oder dem Entwässerungsgehäuse ein Sperrluftanschluss im Bereich des Abstandssensors, vorzugsweise in der Vorfeldkavität des Abstandssensors, zugeordnet sein. Wird die Sperrluft direkt im Bereich des Abstandssensors eingebracht, so wird damit dennoch eindringende Flüssigkeit innerhalb des Gehäuses zuverlässiger von dem Abstandssensor ferngehalten. Dies ist insbesondere dann vorteilhaft, wenn sich der Abstandssensor selbst in einem tiefsten Punkt des Gehäuses befindet.

In konkreter Ausgestaltung kann es sich bei dem Abstandssensor um einen Ultraschallsensor handeln. Diese ermöglichen eine genaue Positionserfassung, sind aber für geringfügige Verschmutzungen weniger anfällig als etwa optische Sensoren, so dass sich diese für die vorliegende Anwendung, in welcher der Abstandssensor durchaus mit Flüssigkeit benetzt werden kann, besonders eignen.

Die vorstehend beschriebene Erfindung wird im Folgenden anhand eines Ausführungsbeispiels näher erläutert.

Es zeigen
- Figur 1: eine Lünette zum Halten von Werkstücken mit einem angrenzenden Entwässerungsgehäuse in seitlicher Querschnittsdarstellung,
- Figur 2: das Entwässerungsgehäuse als Detail der in Figur 1 dargestellten Lünette in einem Betriebszustand mit geschlossenem Ablaufventil, sowie
- Figur 3: das Entwässerungsgehäuse gemäß Figur 2 in einem alternativen Ruhezustand mit geöffnetem Ablaufventil.

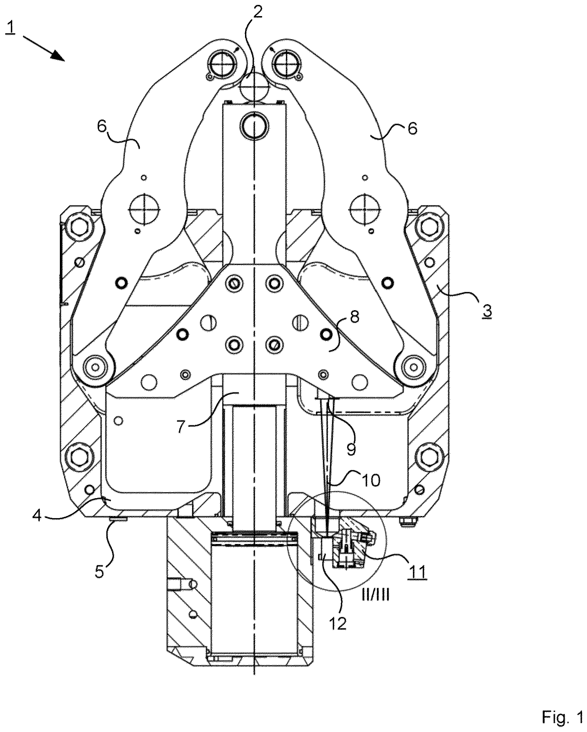

Figur 1 zeigt eine Lünette 1, bei welcher ein Betätigungskolben 7 vorgesehen ist, um über ein Druckelement 8 zwei seitlich flankierende Winkelhebel 6 zu betätigen. Hierbei befindet sich die Lünette 1 in einem geschlossenen Spannzustand, in dem ein Werkstück 2 zwischen den von einem Halteglied des Betätigungskolbens 7 und den Winkelhebeln 6 gebildeten Halteflächen fixiert ist. Um die Spannposition der Lünette 1 für eine Werkzeugsteuerung als Signal erfassen zu können, ist ein Ultraschallsensor 12 als Abstandssensor vorgesehen, welcher einen Abstand zu einer Reflexionsfläche 9 erfasst und damit einen Rückschluss auf die Position und den Spannzustand des Druckelements 8 erlaubt. Nachdem das Druckelement 7 die Winkelhebel 6 betätigt, kann so auf den gesamten Spannzustand der Lünette 1 zurückgeschlossen werden.

Wird in dieser Position nunmehr das Werkstück 2 bearbeitet, so kann etwa durch die Nutzung von Kühlschmiermittel Flüssigkeit in das Gehäuse 3, welches das Druckelement 8, sowie die unteren Bereiche der Winkelhebel 6 und des Betätigungskolbens 7 umschließt, gelangen. Nachdem der Ultraschallsensor sich unterhalb der tiefsten Auslenkung des Druckelements 8 befinden muss, um jede mögliche Position des Druckelements 8 erfassen zu können, kann sich die eindringende Flüssigkeit in einer dem Ultraschallsensor 12 vorgelagerten Vorfeldkavität 13 sammeln und damit die Messwerte des Ultraschallsensors 12 verfälschen. Daher wird über einen Sperrluftanschluss 5 Sperrluft in eine von dem Gehäuse 3 gebildete Gehäusekavität 4 eingebracht, so dass in dem Gehäuse 3 ein Überdruck entsteht. Das Eindringen von Flüssigkeit kann hierdurch zumindest während des Betriebs weitgehend, wenn auch nicht unbedingt restlos, vermieden werden.

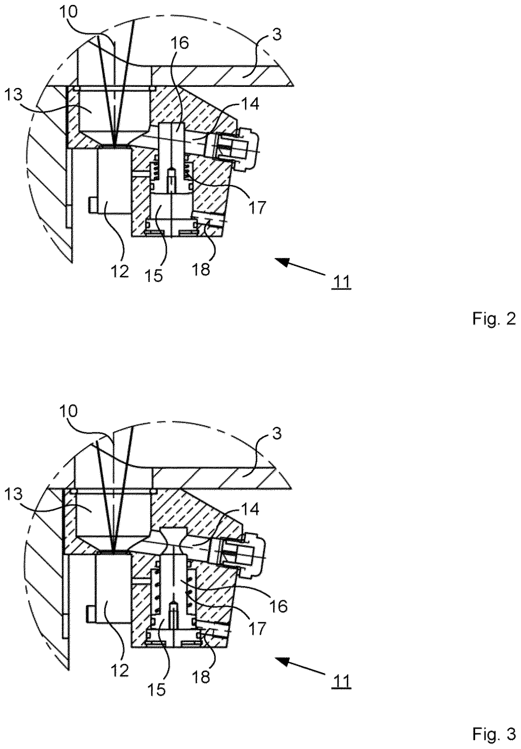

Um auch Flüssigkeit wieder zu entfernen, die nach dem Abschalten der Sperrluft noch in das Gehäuse eindringt, ist in dem tiefsten Punkt ein Entwässerungsgehäuse 11 angebracht, welches in Figur 2 als Detail der Figur 1 vergrößert dargestellt ist. Mit einer Vorfeldkavität 13 mündet das Entwässerungsgehäuse in das Gehäuse 3. Durch die Vorfeldkavität 13 hindurch sendet der Ultraschallsensor 12 seine Abstandssignale 10, deren Reflexionen der Ultraschallsensor 12 wieder auffängt, wobei über den Zeitversatz der Reflexion auf den Abstand zu der Reflexionsfläche 9 des Druckelements 8 zurückgeschlossen werden kann. Von der Vorfeldkavität 13 erstreckt sich eine Ablaufbohrung 14 mit einem Gefälle nach außen, wobei die Ablaufbohrung 14 von einem Ablaufventil 15 verschlossen ist. Dies stellt den Betriebszustand dar, in dem durch das Einbringen von Sperrluft ein Überdruck in dem Gehäuse 3 zwischen 0,5 und 1,0 bar erzeugt und das Eindringen von Flüssigkeit so vermieden wird. Das Ablaufventil 15 verhindert so ein Entweichen der Sperrluft. Um sicherzustellen, dass das Ablaufventil 5 im Betriebszustand stets betätigt ist, weist das Entwässerungsgehäuse 11 einen separaten Sperrluftanschluss 18 auf, welcher betätigungsseitig in das Ablaufventil 15 mündet. Das Ablaufventil 15 weist einen Sperrkolben 16 auf, welcher eine kopfseitige Verbreiterung umfasst und damit eine Druckfeder 17 gegen einen Anschlag drückt. Durch das Einleiten der Sperrluft über den Sperrluftanschluss 18 wird der Sperrkolben gegen die Federkraft der Druckfeder 17 in die Ablaufbohrung 14 geschoben und blockiert diese.

Soll der Betriebszustand verlassen werden, so wird die Sperrluft ebenfalls abgestellt und es liegt kein Druck mehr an dem Sperrluftanschluss 18 an. Diesen Ruhezustand zeigt die Figur 3. Aufgrund der Federkraft der Druckfeder 17 wird der Sperrkolben 16 aus der Ablaufbohrung 14 herausgedrückt und in das Gehäuse 3 eintretende Flüssigkeit kann sich in der einen Sumpf bildenden Vorfeldkavität 13 sammeln und über die Ablaufbohrung 14 aus dem Gehäuse 3 abfließen.

Vorstehend beschrieben ist somit eine Lünette zum Halten eines Werkstücks vorzuschlagen, welche eine genaue Positionserfassung ermöglicht, jedoch Schäden und Beeinträchtigungen durch eindringende Flüssigkeit möglichst weitgehend vermeidet.

### BEZUGSZEICHENLISTE

- 1: Lünette
- 2: Werkstück
- 3: Gehäuse
- 4: Gehäusekavität
- 5: Sperrluftanschluss von 3
- 6: Winkelhebel
- 7: Betätigungskolben
- 8: Druckelement
- 9: Reflexionsfläche
- 10: Abstandssignal
- 11: Entwässerungsgehäuse
- 12: Ultraschallsensor
- 13: Vorfeldkavität
- 14: Ablaufbohrung
- 15: Ablaufventil
- 16: Sperrkolben
- 17: Druckfeder
- 18: Sperrluftanschluss von 11

## Patentansprüche

1. Lünette zum Halten eines Werkstücks (2) auf einer Werkzeugmaschine, mit einem im Wesentlichen senkrecht ausrückbaren Betätigungskolben (7), welcher beiderseits von zwei Winkelhebeln (6) flankiert ist und innerhalb eines Gehäuses (3) über ein Druckelement (8) mit diesen zusammenwirkt, wobei dem Gehäuse (3) eine Sperrluftzufuhr zur Vermeidung eines Eindringens von Flüssigkeit zugeordnet ist,
wobei eine Ausrückposition des Druckelements (8) mittels eines Abstandssensors erfassbar ist, welcher dem Gehäuse (3) unterhalb einer tiefsten Position des Druckelements (8) zugeordnet ist,
**dadurch gekennzeichnet, dass** eine Vorfeldkavität (13) des Abstandssensors zur Entwässerung desselben eine über ein sperrluftbetätigtes Ablaufventil (15) verschließbare Ablaufbohrung (14) aufweist.

2. Lünette gemäß Anspruch 1, **dadurch gekennzeichnet, dass** der Abstandssensor parallel zu dem Betätigungskolben (7) ausgerichtet ist und das Druckelement (8) eine dem Abstandssensor gegenüberliegende Reflexionsfläche (9) zur Reflexion eines von dem Abstandssensor emittierten Abstandssignals (10) aufweist.

3. Lünette gemäß einem der Ansprüche 1 oder 2, **dadurch gekennzeichnet, dass** dem Ablaufventil (15) ein federbetätigter Sperrkolben (16) zugeordnet ist, welcher in einem drucklosen Zustand die Ablaufbohrung (14) freigibt.

4. Lünette gemäß Anspruch 3, **dadurch gekennzeichnet, dass** dem Sperrkolben (16) auf einer Betätigungsseite ein separater Sperrluftanschluss (18) zugeordnet ist.

5. Lünette gemäß Anspruch 3, **dadurch gekennzeichnet, dass** der Sperrkolben (16) auf seiner Betätigungsseite mit einem mit Sperrluft beaufschlagten Gehäuseteil verbunden ist.

6. Lünette gemäß einem der vorhergehenden Ansprüche, **dadurch gekennzeichnet, dass** der Abstandssensor, die Vorfeldkavität (13), die Ablaufbohrung (14) und das Ablaufventil (15) in einem von dem (3) Gehäuse lösbaren Entwässerungsgehäuse (11) aufgenommen sind.

7. Lünette gemäß einem der vorhergehenden Ansprüche, **dadurch gekennzeichnet, dass** dem Gehäuse (3) wenigstens ein Sperrluftanschluss (5) an einem wenigstens lokalen geodätischen Tiefpunkt einer in dem Gehäuse (3) gebildeten Gehäusekavität (4) zugeordnet ist.

8. Lünette gemäß einem der vorhergehenden Ansprüche, **dadurch gekennzeichnet, dass** dem Gehäuse (3) oder dem Entwässerungsgehäuse (11) ein Sperrluftanschluss (5) im Bereich des Abstandssensors, vorzugsweise im Bereich der Vorfeldkavität (13) des Abstandssensors, zugeordnet ist.

9. Lünette gemäß einem der vorhergehenden Ansprüche, **dadurch gekennzeichnet, dass** es sich bei dem Abstandssensor um einen Ultraschallsensor (12) handelt.

## Claims

1. A steady rest for holding a workpiece (2) on a machine tool, comprising an essentially perpendicularly disengageable actuating piston (7) which is flanked by an angle lever (6) on both sides, and which within a housing (3) cooperates with the angle levers via a pressure element (8), a sealing air supply for avoiding penetration of liquid being associated with the housing (3),
wherein a disengaged position of the pressure element (8) is detectable by means of a distance sensor that is associated with the housing (3), below a lowest position of the pressure element (8), **characterized in that** a run-up cavity (13) of the distance sensor for draining the distance sensor via a drain hole (14) that is closeable via a sealing air-actuated discharge valve (15).

2. The steady rest according to Claim 1, **characterized in that** the distance sensor is oriented in parallel to the actuating piston (7), and the pressure element (8) has a reflective surface (9), opposite from the distance sensor, for reflecting a distance signal (10) emitted from the distance sensor.

3. The steady rest according to one of Claims 1 or 2, **characterized in that** a spring-actuated blocking piston (16), which in an unpressurized state opens up the drain hole (14), is associated with the discharge valve (15).

4. The steady rest according to Claim 3, **characterized in that** a separate sealing air connection (18) is associated with the blocking piston (16) on an actuation side.

5. The steady rest according to Claim 3, **characterized in that** the blocking piston (16) is connected on its actuation side to a housing part that is acted on by sealing air.

6. The steady rest according to one of the preceding claims, **characterized in that** the distance sensor, the run-up cavity (13), the drain hole (14), and the discharge valve (15) are accommodated in a drainage housing (11) that is detachable from the housing (3).

7. The steady rest according to one of the preceding claims, **characterized in that** at least one sealing air connection (5) at one at least local geodetic low point of a housing cavity (4) formed in the housing (3) is associated with the housing (3).

8. The steady rest according to one of the preceding claims, **characterized in that** a sealing air connection (5) in the region of the distance sensor, preferably in the region of the run-up cavity (13) of the distance sensor, is associated with the housing (3) or the drainage housing (11).

9. The steady rest according to one of the preceding claims, **characterized in that** the distance sensor is an ultrasonic sensor (12).

## Revendications

1. Une lunette pour le maintien d'une pièce à usiner (2) sur une machine-outil, comprenant un piston d'actionnement (7) débrayable essentiellement perpendiculairement, flanqué des deux côtés d'un levier d'angle (6), et qui, à l'intérieur d'un boîtier (3), coopère avec les leviers d'angle par l'intermédiaire d'un élément de pression (8), une alimentation en air de barrage pour éviter la pénétration d'un liquide étant associée au boîtier (3),
dans laquelle une position désengagée de l'élément de pression (8) est détectable au moyen d'un capteur de distance associé au boîtier (3), en dessous d'une position basse de l'élément de pression (8), **caractérisé en ce qu'**une cavité d'écoulement (13) du capteur de distance permet de drainer le capteur de distance via un trou de drainage (14) qui peut être fermé par une soupape d'évacuation (15) à air de barrage.

2. La lunette selon la revendication 1, **caractérisée en ce que** le capteur de distance est orienté parallèlement au piston d'actionnement (7), et que l'élément de pression (8) présente une surface réfléchissante (9), opposée au capteur de distance, pour réfléchir un signal de distance (10) émis par le capteur de distance.

3. La lunette selon l'une des revendications 1 ou 2, **caractérisée en ce qu'**un piston de blocage (16) actionné par un ressort, qui ouvre l'orifice de vidange (14) à l'état non pressurisé, est associé à la soupape d'évacuation (15).

4. La lunette selon la revendication 3, **caractérisée en ce qu'**un raccord d'air de barrage séparé (18) est associé au piston de blocage (16) du côté de l'actionnement.

5. La lunette selon la revendication 3, **caractérisée en ce que** le piston de blocage (16) est relié, du côté de son actionnement, à une partie du boîtier sur laquelle agit l'air de barrage.

6. La lunette selon l'une des revendications précédentes, **caractérisée en ce que** le capteur de distance, la cavité d'écoulement (13), l'orifice de vidange (14) et la soupape d'évacuation (15) sont logés dans un boîtier de vidange (11) qui est détachable du boîtier (3).

7. La lunette selon l'une des revendications précédentes, **caractérisée en ce qu'**au moins un raccord d'air de barrage (5) à un point bas géodésique au moins local d'une cavité de logement (4) formée dans le logement (3) est associé au logement (3).

8. La lunette selon l'une des revendications précédentes, **caractérisée en ce qu'**un raccord d'air de barrage (5) dans la zone du capteur de distance, de préférence dans la zone de la cavité d'écoulement (13) du capteur de distance, est associé au boîtier (3) ou au boîtier de drainage (11).

9. La lunette selon l'une des revendications précédentes, **caractérisée en ce que** le capteur de distance est un capteur à ultrasons (12).
